# EUROPEAN PATENT SPECIFICATION

(11) **EP 4 278 175 B1**
(45) Date of publication and mention of the grant of the patent: **04.03.2026**
(21) Application number: 22700262.3
(22) Date of filing: 13.01.2022
(51) Int. Cl.: G01N 27/447, G01N 30/88

(54) **POLYOL SOLUTION FOR COATED CAPILLARIES IN CAPILLARY ISOELECTRIC FOCUSING**
POLYOL-LÖSUNG FÜR BESCHICHTETE KAPILLAREN FÜR DIE KAPILLARE ISOELEKTRISCHE FOKUSSIERUNG
SOLUTION DE POLYOLS POUR CAPILLAIRES EN FOCALISATION ISOÉLECTRIQUE CAPILLAIRE

(30) Priority: 13.01.2021 US 202163136883 P
(43) Date of publication of application: 22.11.2023
(73) Proprietor: DH Technologies Development Pte. Ltd., Singapore 739256 (SG)
(72) Inventor: WEI, Pei-Hsun, Concord, Ontario L4K 4V8 (CA)
(74) Representative: Maiwald GmbH
(86) International application number: PCT/IB2022/050260
(87) International publication number: WO 2022/153209

(56) References cited:
- WO-A1-01/14437
- ROMAND STÉPHANIE ET AL: "cIEF for rapid pKadetermination of small molecules: A proof of concept", EUROPEAN JOURNAL OF PHARMACEUTICAL SCIENCES, ELSEVIER AMSTERDAM, NL, vol. 63, 1 July 2014 (2014-07-01), pages 14 - 21, XP029056575, ISSN: 0928-0987, DOI: 10.1016/J.EJPS.2014.06.016
- POITEVIN ET AL: "Comparison of different capillary isoelectric focusing methods-use of ''narrow pH cuts'' of carrier ampholytes as original tools to improve resolution", JOURNAL OF CHROMATOGRAPHY A, ELSEVIER, AMSTERDAM, NL, vol. 1155, no. 2, 13 June 2007 (2007-06-13), pages 230 - 236, XP022114907, ISSN: 0021-9673, DOI: 10.1016/J.CHROMA.2007.02.013
- TOWNS J K ET AL: "Synthesis and evaluation of epoxy polymer coatings for the analysis of proteins by capillary zone electrophoresis", JOURNAL OF CHROMATOGRAPHY A, ELSEVIER, AMSTERDAM, NL, vol. 599, no. 1-2, 22 May 1992 (1992-05-22), pages 227 - 237, XP026772818, ISSN: 0021-9673, [retrieved on 19920522], DOI: 10.1016/0021-9673(92)85476-A
- LECOEUR M ET AL: "Separation and quantitation of milk whey proteins of close isoelectric points by on-line capillary isoelectric focusing-Electrospray ionization mass spectrometry in glycerol-water media", JOURNAL OF CHROMATOGRAPHY A, ELSEVIER, AMSTERDAM, NL, vol. 1217, no. 46, 12 November 2010 (2010-11-12), pages 7293 - 7301, XP027428202, ISSN: 0021-9673, [retrieved on 20101013], DOI: 10.1016/J.CHROMA.2010.09.043
- DOHERTY E A S ET AL: "Microchannel wall coatings for protein separations by capillary and chip electrophoresis", ELECTROPHORESIS, VERLAG CHEMIE, vol. 24, no. 1-2, 1 January 2003 (2003-01-01), pages 34 - 54, XP002611839, ISSN: 0173-0835, [retrieved on 20030110], DOI: 10.1002/ELPS.200390029

## Description

### Field

This application relates to coated capillaries and their storage and usage with capillary isoelectric focusing.

### Background

Capillary Isoelectric Focusing (cIEF) is a high-resolution analytical separation technique based on the isoelectric point of charged molecules. Commercially available capillaries used in cIEF applications are typically manufactured, stored, and shipped pre-filled with cIEF media and are sealed (e.g., gel-filled capillaries with end-caps or other seal types). It is important to maintain the condition of the capillaries and capillary media during these phases, as the introduction of air to the capillary media (e.g., during manufacture, or via damage to/loss of a seal) can dry the media and adversely affect capillary performance and lifespan. Similarly, once the column is in use, the column performance, lifespan, and media integrity can be negatively affected by prolonged storage, poor column conditioning practices, and poor storage conditions. Alternative strategies that demand less end-user expertise and care-in-handling while ensuring the robustness and performance of capillary media would provide a significant advance to the technology. The disclosure provides a series of solutions that provide for robust column performance and media integrity even under harsh storage conditions, without having to rely on specific physical means or user expertise.

A polymer-coated capillary comprising a capillary tube having an interior surface and an exterior surface and a polymer coating on the interior surface of the capillary tube is known e.g. from the article "clEF for rapid pKa determination of small molecules: A proof of concept" (published in EUROPEAN JOURNAL OF PHARMACEUTICAL SCIENCES, ELSEVIER AMSTERDAM, NL, vol. 63, 1 July 2014, pages 14-21).

### Summary

The invention is defined in the appended claims. As described herein, the disclosure provides for a polyol solution that can extend the effective lifespan of media used capillary isoelectric focusing (clEF). The inventors have identified that contacting a polymer-coated capillary with an amount of a polyol solution can increase the robustness of the media used in capillary isoelectric focusing in terms of its useful lifetime as well as its storage capacity.

The present invention provides a solution comprising from about 5% to about 50% of a polyol that prolongs the storage lifetime and/or the useful lifetime of a coating on the interior surface of a polymer coated isoelectric focusing capillary tube.

According to the present invention, a polymer-coated capillary is provided, said capillary comprising: a capillary tube having an interior surface and an exterior surface, a polymer coating on the interior surface of the capillary tube, and a solution comprising from about 5% to about 50% of a polyol that contacts the polymer coating. In some embodiments, the polymer-coated capillary is a neutral polymer-coated capillary.

In some embodiments, the polyol may comprise a low molecular weight polyol. In some further embodiments the polyol comprises a diol or a triol. In yet some further embodiments, the polyol comprises glycerol.

In some embodiments, the solution comprises a polyol in an amount that provides a solution viscosity of about 0.30 to 30.00 cP. In some embodiments, the amount of the polyol provides a solution viscosity of less than 40 cP, 35 cP, 30 cP, 25 cP, 20 cP, 15 cP, 10 cP, 5 cP, or less than 1 cP. In some further embodiments, the solution viscosity is measured within a temperature range of about 0°C to about 100°C.

In some embodiments, the polymer-coated capillary comprises an internal diameter of about 0.1 to 3000 µm. In some embodiments, the capillary comprises an internal diameter of less than 200 µm.

In some embodiments, the polymer-coated capillary does not comprise an end cap or seal.

The present invention further provides a pre-assembled capillary cartridge comprising at least one polymer-coated capillary that comprises an interior surface and an exterior surface, a polymer coating on the interior surface, and a solution comprising from about 5% to about 50% of a polyol that contacts the polymer coating.

In embodiments, the pre-assembled capillary cartridge comprises at least one polymer-coated capillary that comprises unsealed ends. In some embodiments, the pre-assembled capillary cartridge comprises at least one polymer-coated capillary that comprises a neutral polymer. In some embodiments, the pre-assembled capillary cartridge comprises a plurality of polymer-coated capillaries.

The present invention further provides a method of manufacturing a polymer-coated capillary having improved storage capacity, the method comprising: providing a capillary tube having an interior surface and an exterior surface, wherein the capillary tube has a polymer coating on the interior surface, and contacting the polymer coating on the interior surface of the capillary tube with a solution comprising from about 5% to about 50% of a polyol.

In some embodiments, the method further comprises drying the interior of the polymer-coated capillary after contacting with the solution.

In another aspect which does not form part of the present invention, the disclosure provides a kit comprising a polymer-coated capillary; a solution comprising from about 5% to about 50% of a polyol; and instructions for use. In some embodiments, the kit comprises a pre-assembled capillary cartridge that comprises at least one polymer-coated capillary; a solution comprising from about 5% to about 50% of a polyol; and instructions for use.

In further embodiments of any of the above aspects and embodiments, the solution comprises about 10% of the polyol and, in yet further embodiments, the polyol comprises glycerol.

Other aspects and embodiments will become apparent from the detailed description and illustrative embodiments and examples below.

### Brief Description of Drawings

FIG. 1 depicts, for purposes of contrast, a set of separations that show failed capillary storage conditions where drying during storage causes damage to the capillary coating.
FIG. 2 depicts a series of cIEF separations using a neutral polymer-coated capillary with dynamic coating with (PEO) during runs.
FIG. 3 depicts a separation run for peptide pl markers using a PEO column in accordance with example embodiments of the disclosure that shows elution of the markers during the focusing step under accelerated shelf life storage conditions.
FIG. 4 depicts cIEF separation experiments using a neutral polymer-coated capillary and polyol solution in accordance with the aspects and example embodiments of the disclosure.
FIG. 5A-5K depicts a series of over 200 cIEF separations using a neutral polymer-coated capillary and polyol solution in accordance with the aspects and example embodiments of the disclosure.
FIG. 6 depicts a cross-sectional view of a capillary in accordance with the present teachings.
FIG. 7 depicts a cartridge using a plurality of capillaries in accordance with the teachings herein.

### Detailed Description

In a general sense, the disclosure provides a series of storage solutions that find use in capillary columns, and capillary isoelectric focusing in particular. The storage solutions in accordance with the disclosure help to avoid problems sometimes associated with capillary manufacturing, shipping, and storage and that can result in non-functional capillaries or capillaries that have shortened useful lifespan. The polyol solutions can be incorporated into the column during manufacture, storage, or shipping, or can be incorporated by the end-user. The polyol solutions can be used in combination with any type of capillary polymer coating, media, or conditioning solutions. Accordingly, the storage solutions in accordance with the disclosure help improve capillary coating stability and run-life, even under harsh storage, shipping, and use conditions.

In some aspects, the disclosure provides an aqueous solution, which may be referred to herein alternatively as a "polyol solution," "clEF solution," or as a "storage solution," comprising a polyol in concentrations that are sufficient to increase the performance and/or functional characteristics of the coating in an isoeletric focusing capillary column.

In accordance with the aspects and example embodiments of the disclosure, a "polyol" comprises an organic compound having more than one hydroxyl functional groups. In some aspects and embodiments of the disclosure, the polyol (cIEF or storage) solution includes a polyol that may comprise two hydroxyl groups (diol), three hydroxyl groups (triol), four hydroxyl groups (tetrol), or more than four hydroxyl groups. In some further aspects and embodiments a polyol may be a low molecular weight polyol, including molecules that comprises a glycol moiety (e.g., ethylene glycol, propylene glycol, butanediol, etc.), a sugar alcohol, including sugar alcohols of the general formula HOCH₂(CHOH)ₙCH₂OH, wherein n is selected from 1, 2, 3, 4, 5, or 6, and which includes glycerol (propane-1,2,3-triol, (CH₂OH)₂CHOH) or molecules derived from glycerol, or branched polyols such as the non-limiting examples of trimethylolpropane (TMP) and pentaerythritol. Polyols in accordance with the disclosure can also encompass higher molecular weight polymeric polyols (e.g., polyether, polyester, and polyvinyl polyols), including non-limiting examples of polyethylene oxides, polyethylene glycols, polypropylene glycols, and polyvinyl alcohols. In some embodiments, polymeric polyols may comprise molecules of about 1000 carbon atoms or less, and are typically of an average molecular weight of no more than about 15,000 Da.

In some embodiments that do not form part of the present invention, the storage solution comprises polyol in an amount from about 5% to about 70% of the solution, by weight or by volume. In such embodiments, the polyol may be sufficiently soluble in aqueous solvent such that is can be prepared at a concentration within the stated ranges. In some embodiments the aqueous solvent may comprise an amount of one or more alcohols including, for example, primary, secondary, or tertiary alcohols (e.g., methanol, ethanol, propanols, butanols, or pentanols and the like). In some embodiments, the amount of the polyol in the cIEF solution provides a viscosity of the solution that ranges from about 1.05 to about 20 cP (at 20°C). In further embodiments, the amount of the polyol provides a solution viscosity (at 20°C) of about 1.1 to about 4.0 cP, including any particular viscosity and range of viscosities within that range (e.g., 1.2 cP, 1.3 cP, 1.4 cP, 1.5 cP, 1.6 cP, 1.7 cP, 1.8 cP, 1.9 cP, 2.0 cP, 2.1 cP, 2.2 cP, 2.3 cP, 2.4 cP, 2.5 cP, 2.7 cP, 3.0 cP, 1.1-1.7 cP, 1.2-2.0 cP, etc).

In some particular embodiments, the polyol comprises a low molecular weight polyol in an amount ranging from about 5% to about 50% (by weight or volume). In yet further embodiments, the storage solution comprises glycerol in an amount within a range of about 5% to about 50%, about 5% to about 40%, about 5% to about 30%, about 5% to about 25%, about 5% to about 20%, about 5% to about 15%, about 5% to about 10%, or about 5%, 6%, 7%, 8%, 9%, 10%, 11%, 12%, 13%, 14%, 15%, 16%, 17%, 18%, 19%, or 20%. In yet further embodiments, the low molecular weight polyol comprises glycerol in an amount as recited above.

In an aspect the disclosure provides a polymer-coated capillary comprising: a capillary tube having an interior surface and an exterior surface, a polymer coating on the interior surface of the capillary tube, and a storage solution comprising a polyol, in accordance with the aspects and embodiments of the disclosure, that contacts the polymer coating. In another aspect, the disclosure provides a pre-assembled capillary cartridge comprising at least one polymer-coated capillary that comprises a capillary tube having an interior surface and an exterior surface, a polymer coating on the interior surface of the capillary tube, and a storage solution comprising a polyol, in accordance with the aspects and embodiments of the disclosure, that contacts the polymer coating. In some embodiments of these aspects, the capillary may comprise a fused-silica type capillary. In embodiments, the internal surface of the fused-silica type capillary can be functionalized and/or pre-filled with separation gel. In embodiments, the capillary may be pre-treated using any number of typical pretreatment solutions as generally known in the art. In some embodiments the polymer-coated capillary may comprise a negative fused silica capillary or neutral polymer-coated capillary.

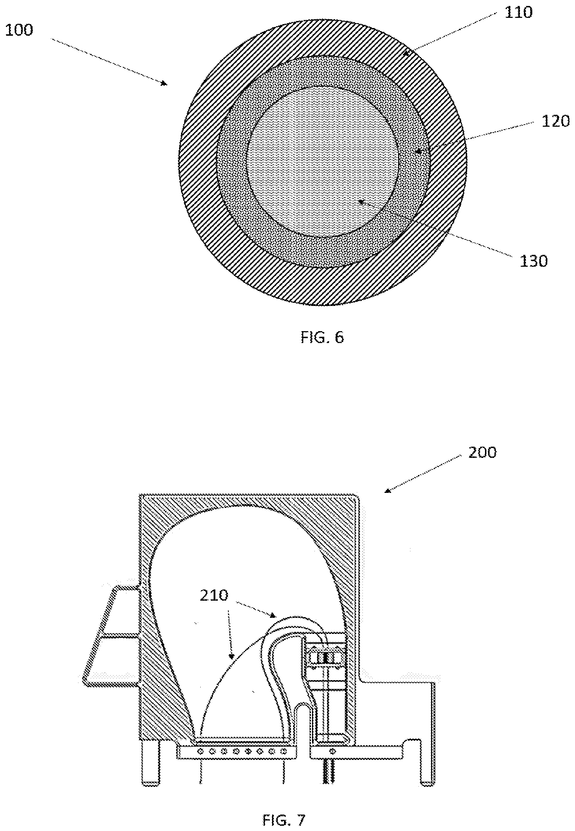

With reference to FIG. 6, a cross sectional view of polymer coated capillary 100 is depicted comprising a capillary tube 110 having an exterior surface and an interior surface, the interior surface having a polymer coating 120 disposed thereon. The polymer coated capillary is filled with a storage solution 130 in accordance with the present teachings that comprises a polyol that contacts the polymer coating on the interior of the coated capillary. In some embodiments, this solution can be optionally dried leaving a residual amount of the polyol sufficient to stabilize the polymer coating.

In some embodiments, the capillary comprises a polymer composition or a polymer composition in combination with an organic acid (an acidic polymer composition). In some aspects, the polymer comprises polyacrylamide, polyethylene oxide (PEO), polyethylene glycol (PEG), polyvinyl alcohol (PVA), polyvinylpyrrolidone (povidone, polyvidone, or PVP) or polyoxyethylene (POE) and derivatives thereof. In embodiments that include an organic acid, some embodiments comprise a carboxylic acid. In further embodiments, the carboxylic acid comprises at least one of acetic acid, lactic acid, formic acid, citric acid, oxalic acid, uric acid, malic acid, or tartaric acid. In still a further embodiment, the capillary can comprise an acidic polymer composition comprising about 1.0% (w/v) polyethylene oxide (PEO) and 4% (v/v) acetic acid (HAc). In some further embodiments, the PEO has a molecular weight of at least 900,000 Da.

In some embodiments, the capillary comprises dimensions that are typical for capillary electrophoresis applications. In some embodiments the capillary comprises an internal diameter ranging from about 20-250 µm, including any particular diameter and range of diameters within that range (e.g., 100 µm, 150 µm, 75 µm, 50-250 µm, 25-100 µm, 25-75 µm). In some embodiments the internal diameter may range from about 25 µm to no more than about 100 µm. In embodiments, the length of the capillary may vary, but is typically from about 1 cm to about 100 cm, including any particular length and range of lengths within that range (e.g., 100 cm, 50 cm, 75 cm, 1-5 cm, 1-10 cm, 50-80 cm, 25-100 cm, 45-75 cm, etc.).

In embodiments relating to a pre-assembled capillary cartridge, the cartridge comprises at least one polymer-coated capillary comprising a polyol solution in accordance with the embodiments of the disclosure. In some embodiments, the cartridge comprises a plurality of polymer coated capillaries (e.g., 2, 3, 4, 5, 6, 7, 8, 9, or 10 or more capillaries), in accordance with the aspects and embodiments of the disclosure.

With reference to FIG. 7, an internal view of a pre-assembled capillary cartridge 200 is depicted that can be used in accordance with the present teachings to carry out capillary isoelectric focusing when used as part of a complementary capillary electrophoresis device (not shown). The cartridge comprises a plurality of capillaries 210 (only two being shown).

In some embodiments, the capillary may comprise an optional endcap or seal at one or both terminal ends of the capillary. Thus, in embodiments, the disclosure provides a polymer-coated capillary, or a pre-assembled capillary cartridge, wherein the polymer-coated capillary does not include or comprise an end cap or seal. As described herein, and as illustrated by example embodiments, polyol solutions in accordance with the aspects and embodiments of the disclosure can improve the stability and run lifespan of a polymer-coated capillary under harsh conditions. Thus, the disclosure allows for the manufacture, production, storage, and shipping of a polymer-coated capillary as well as pre-assembled capillary cartridges comprising at least one polymer-coated capillary, that do not comprise an end cap or seal on the capillary. Further, the disclosure allows the end-user to use, maintain, and/or store a capillary, or pre-assembled capillary cartridge, without the need to cap or seal the ends of the capillary when not in use.

In another aspect, the disclosure provides a kit comprising a polymer-coated capillary and/or a pre-assembled capillary cartridge comprising at least one polymer-coated capillary; a polyol solution in accordance with the aspects and embodiments of the disclosure; and instructions for use. In embodiments, the instructions for use may comprise instructions for performing one or more of the methods in accordance with the aspects and embodiments that are described below. In some embodiments, the polymer-coated capillary contains the polyol solution in accordance with the present teachings on the interior of the capillary.

In other aspects, the disclosure provides methods that incorporate the polyol solutions in accordance with the aspects and embodiments described herein. In some embodiments the method relates to manufacturing a polymer-coated capillary having improved storage capacity, the method comprising: providing a capillary tube having an interior surface and an exterior surface, wherein the capillary tube has a polymer coating on the interior surface, and contacting the polymer coating on the interior surface of the capillary tube with a polyol solution in accordance with the aspects and embodiments of the disclosure. In some embodiments, the manufacturing method may comprise drying the interior of the polymer-coated capillary after contacting the capillary with the polyol solution, leaving a residual amount of polyol present to stabilize the polymer.

In other embodiments, the method relates to improving capillary isoelectric focusing (cIEF) robustness or performance, the method comprising providing a polymer-coated capillary and a polyol solution in accordance with the aspects and embodiments of the disclosure, and contacting the polymer coating on the interior surface of the capillary tube with the polyol solution.

In yet other embodiments, the method relates to improving the useful life span of a polymer-coated capillary, the method comprising providing a polymer-coated capillary and a polyol solution in accordance with the aspects and embodiments of the disclosure, and contacting the polymer coating on the interior surface of the capillary tube with the polyol solution.

In some embodiments of any of the above methods, the method may comprise a step selected from the group consisting of a storing step, a drying step, a rehydration step, a conditioning step, a rinse in separation step, a resting step, a cleaning step, a coating regeneration step, and a recoating step.

In some embodiments of any of the above methods, the capillary tube (e.g., polymer-coated capillary) may be contacted with a volume of polyol solution equivalent to one or more capillary column volumes (e.g. 0.5, 1, 2, 3, 4, 5, 6, 7, 8, 9, or 10 or more column volumes).

In embodiments of any of the above methods, the method may provide improved capillary performance that may be characterized based on measuring any one or more of: reduced column conditioning time; faster capillary absorption; minimized cIEF performance variations between capillaries between lots and within lots; minimized detection time fluctuations between replicate separations; minimized polymer coating damage during storage, shipping, or use; improved assay robustness; increased detection time reproducibility; increased wall life of the capillary; improved rehydration capacity; and improved performance after regeneration and/or rest periods.

### Examples

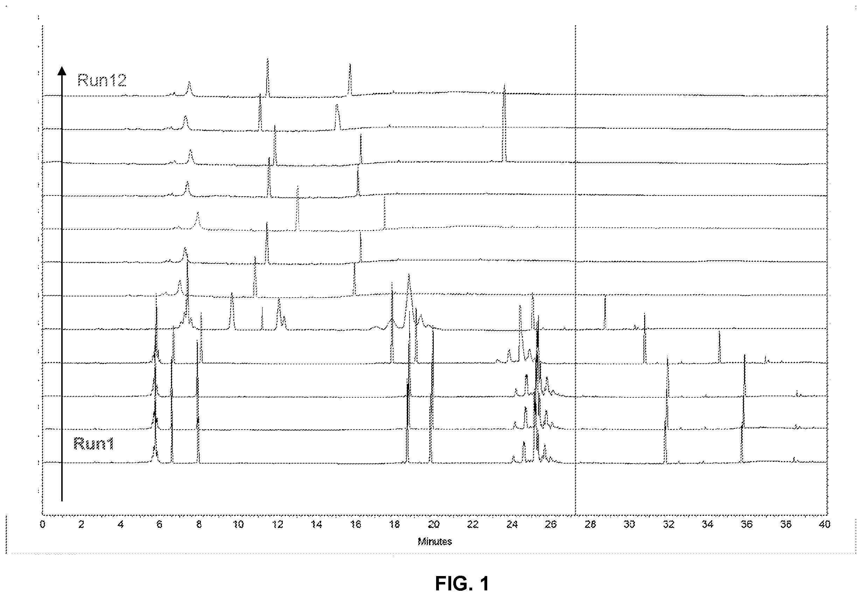

A series of experiments are conducted to assess various solutions in accordance with various aspects and embodiments of the disclosure and the effect those solutions have on various capillary columns. The first set of experiments establish a baseline level for the general robustness of a capillary comprising a pre-filled cIEF gel coating. A series (e.g., 12 runs) of column separations are performed using a prefilled cIEF gel capillary, where the prefilled capillary is allowed to dry out (e.g., to mimic a broken or faulty column seal or unintended drying). FIG. 1 demonstrates that the dried capillary fails to separate a set of peptide standard pl markers over the course of only 12 separations.

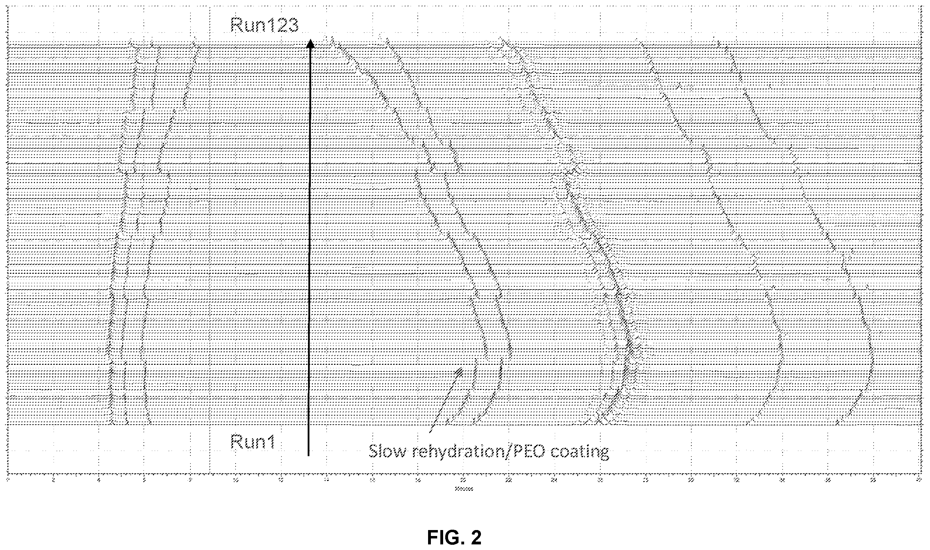

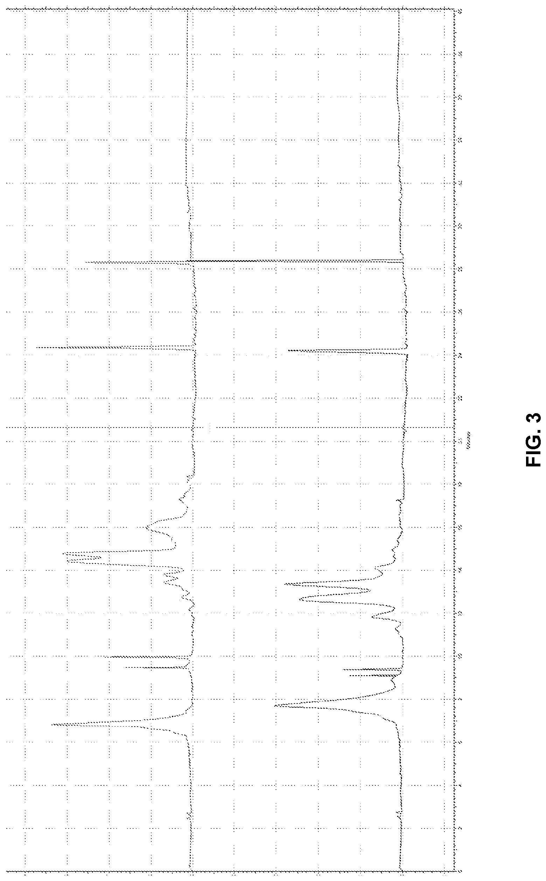

In another series of experiments, a neutral coating capillary without pre-filled cIEF gel is conditioned with dynamic coating using a polymer composition comprising polyethylene oxide (PEO), during separation runs, using peptide standard pl markers. FIG. 2 demonstrates that over the 123 test runs, the standards exhibit a wide range of detection times that are attributable to the dynamic PEO coating (no prefilling). An additional stress/drying experiment is performed on a pre-filled PEO conditioned column to assess performance. In brief, the column is subjected to accelerated shelf life conditions of storage at 55°C for 6 days prior to separation runs. FIG. 3 illustrates that the peptide markers begin to elute from the column during the focusing step, which may demonstrate that the coating (i) is not retained in the column and/or (ii) may be failing to rehydrate sufficiently to interact with the sample.

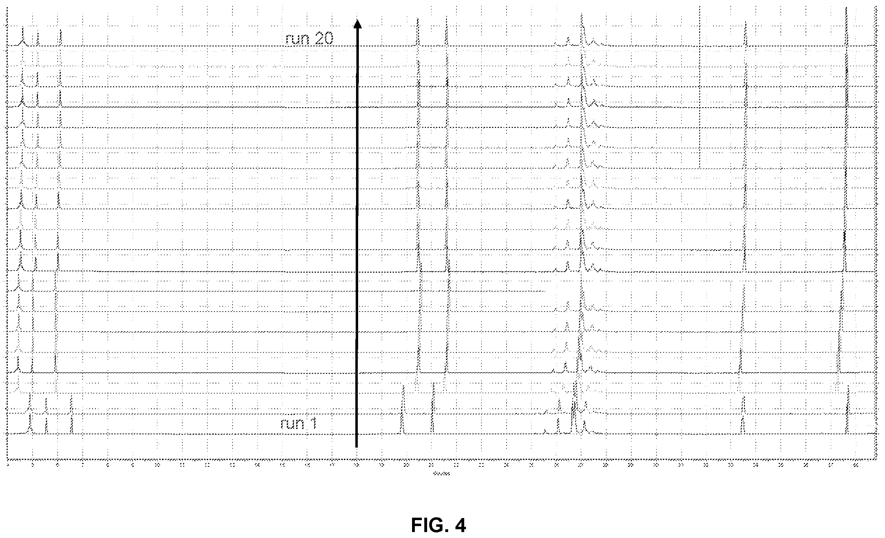

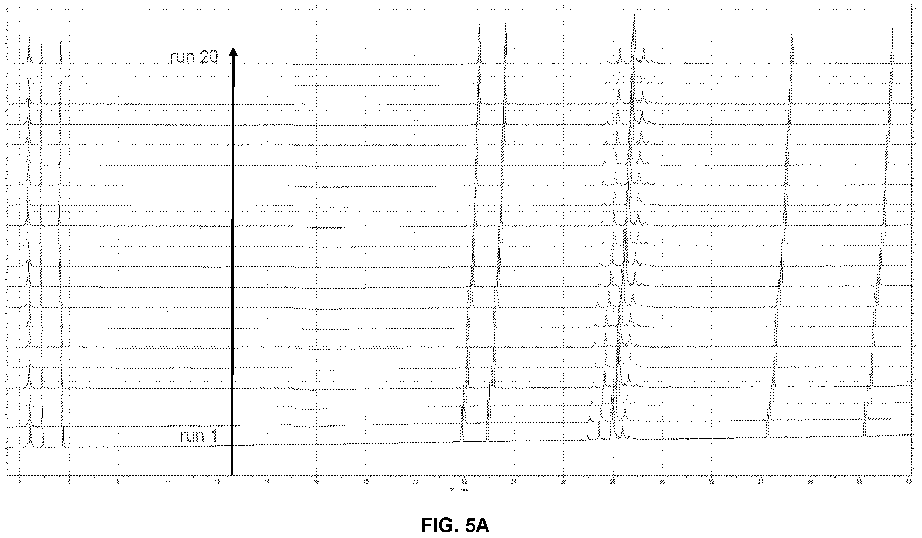

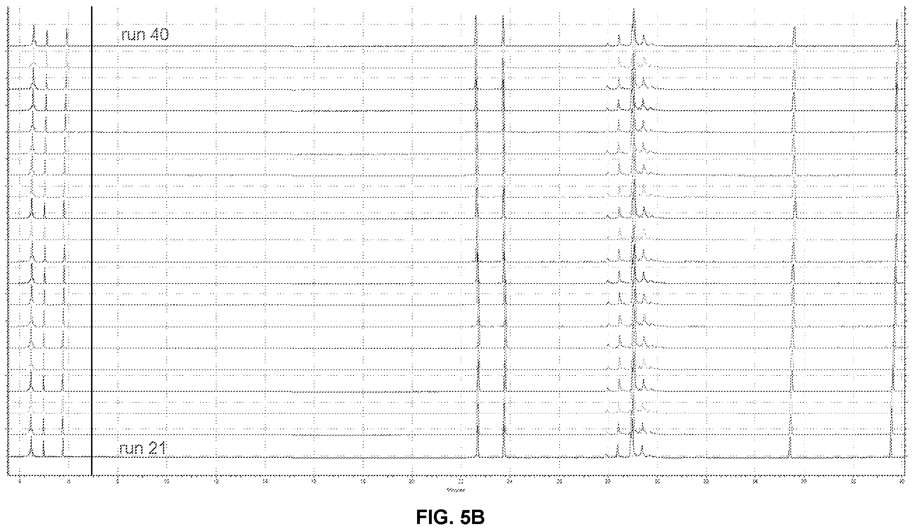

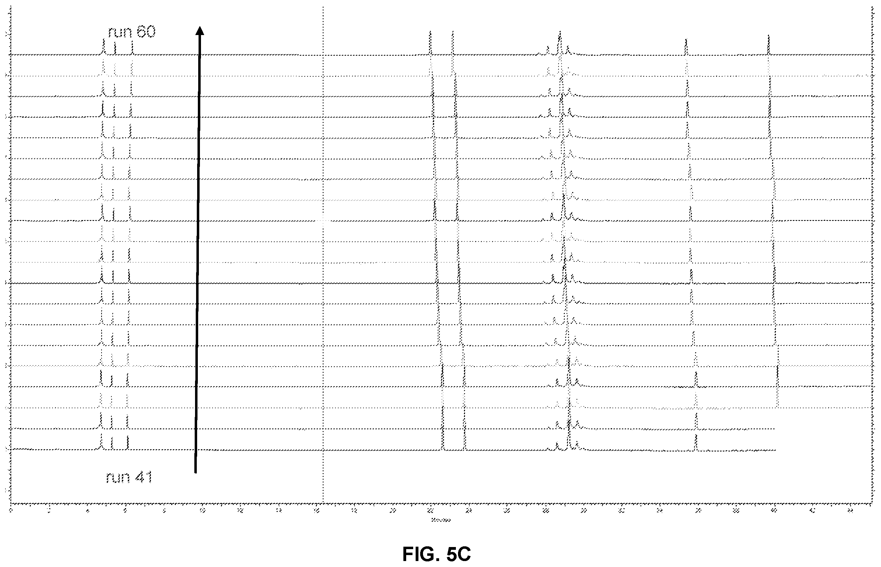

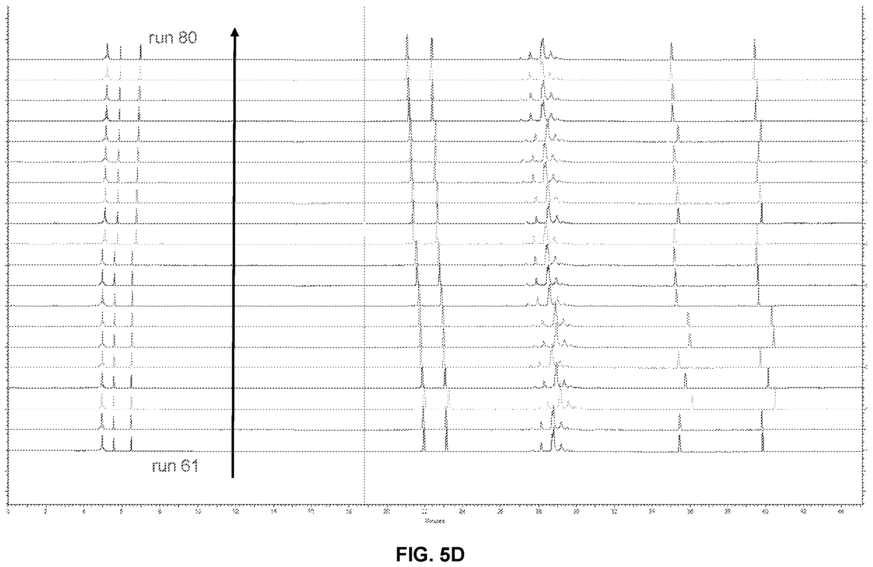

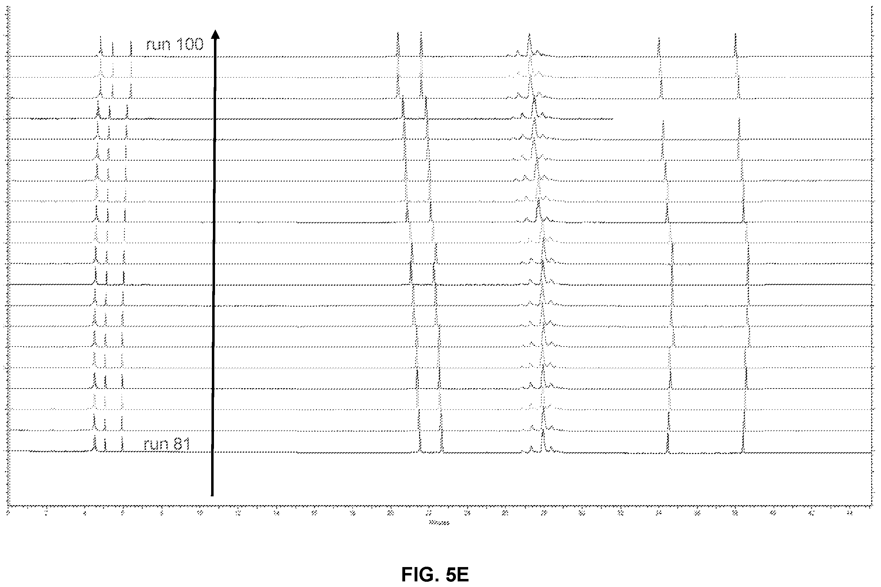

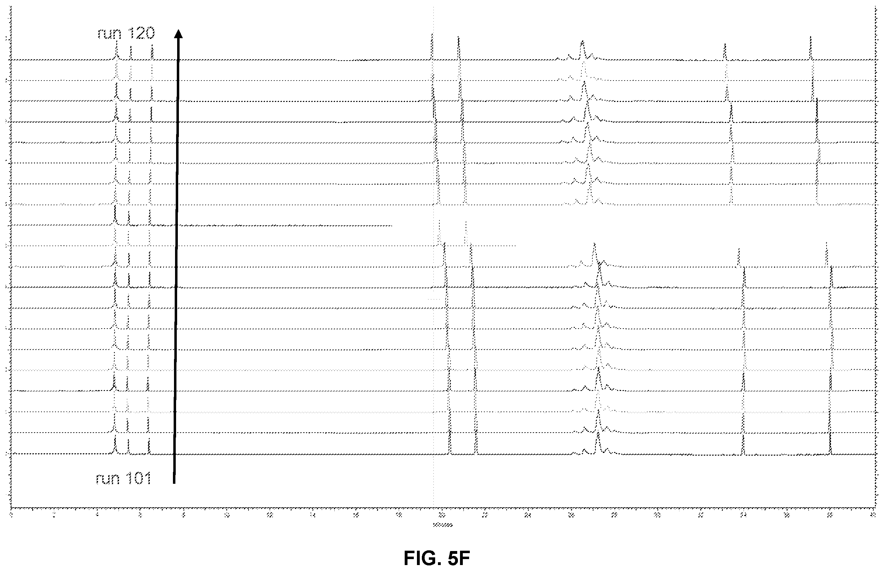

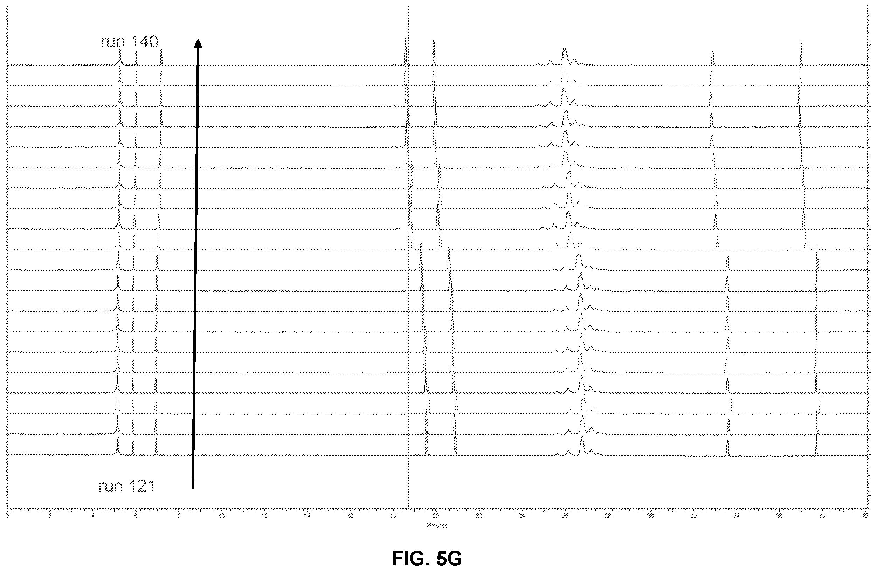

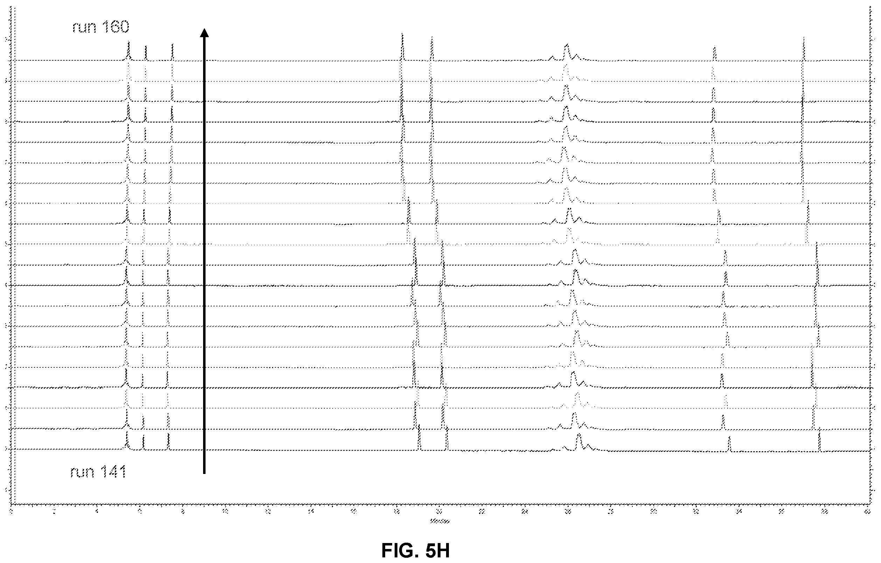

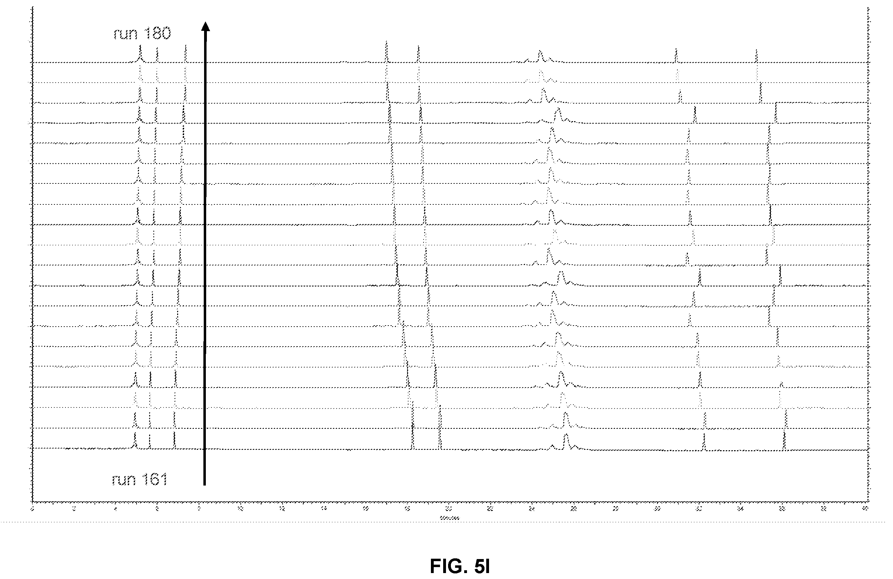

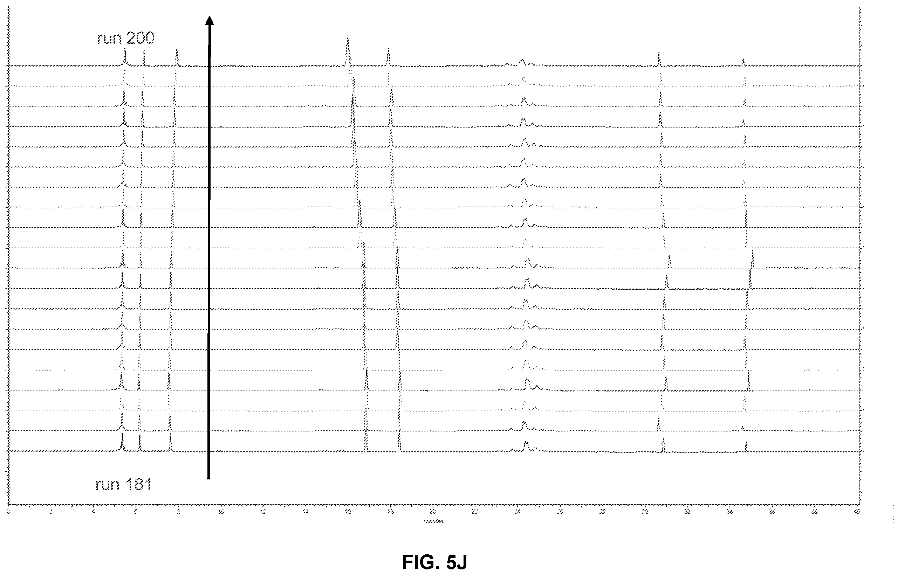

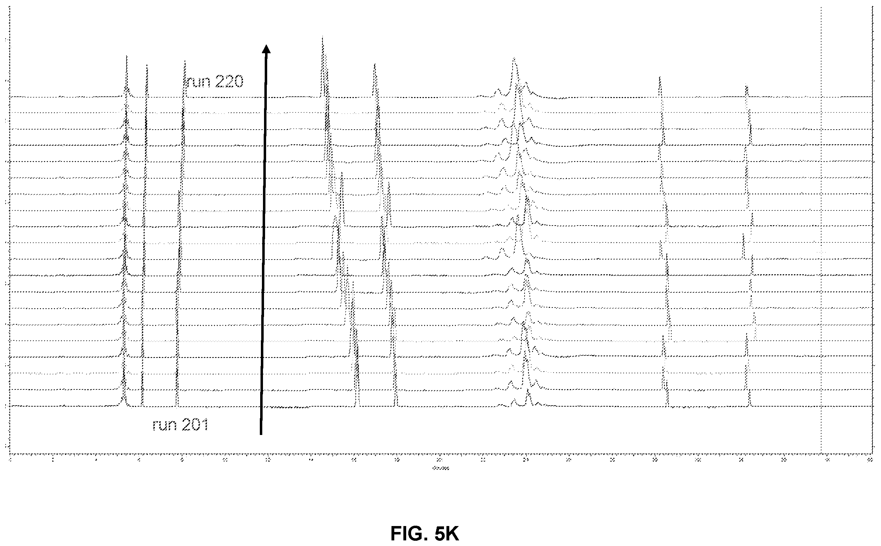

In accordance with example embodiments of the disclosure, a series of separation experiments are performed using a capillary containing a dynamic PEO coating, and conditioned with a solution comprising 10% glycerol. FIG. 4 depicts the separation achieved over 20 separations after the capillary was heated at 55°C for 6 days without seals. Further experiments are conducted on a column containing the same PEO separation matrix, treated with 10% glycerol and stored without seals at room temperature for 10 days. Following the 10 day storage, the column was flushed out with air and stored for 6 days at 55°C. FIGs. 5A-5K demonstrates that the 10% glycerol solution was sufficient to stabilize the capillary and separations for over 200 consecutive separations. Analysis of the resolution and pl calibration over the course of the 200 separations indicates that the resolution (Rs) is <0.03 from run 5 to run 205, and a pl calibration R² value of 0.9997 at run 5 and 0.9994 at run 205. Effective run life in these experiments is measured using the pl 10 marker migration time - coating is considered to be failing (and the separation as failing) once the migration time of that marker is less than 15 min.

The examples illustrate that the disclosure provides for polyol solutions that confer increased stability and robustness to the coating in capillary columns. For example, polyol solutions in accordance with the disclosed aspects and embodiments provide for columns to run continuously for over 100 consecutive separations and maintain excellent sample resolution and separation characteristics over a wide range of pl values. Further the polyol solutions provide for an increased column shelf/storage life, with the accelerated thermal stress testing demonstrating an equivalent shelf life of greater than 2 years, all while performing in line with acceptable sample resolution and separation characteristics for over 100 continuous separation runs. The polyol solutions and column comprising the solutions exhibit resistance to surface coating damage, provide for column seals that are optional (not required) to maintain column integrity, and improve the useful life of the column in terms of both time and number of separations.

## Claims

1. A polymer-coated capillary (100) comprising:
a capillary tube (110) having an interior surface and an exterior surface,
a polymer coating (120) on the interior surface of the capillary tube (110),
**characterized in that** said polymer-coated capillary (100) further comprises
a storage solution (130) comprising from 5% to 50% of a polyol that contacts the polymer coating (120) during storage of the capillary tube (110).

2. The polymer-coated capillary of claim 1, wherein the polymer-coated capillary is a neutral polymer-coated capillary.

3. The polymer-coated capillary of any of claims 1-2, wherein the polyol in the storage solution comprises a polyol with an average molecular weight of no more than about 15,000 Da.

4. The polymer-coated capillary of any of claims 1-3, wherein the polyol in the storage solution comprises a diol or a triol.

5. The polymer-coated capillary of any of claims 1-4, wherein the polyol in the storage solution comprises a glycol moiety and has an average molecular weight of no more than about 15,000 Da.

6. The polymer-coated capillary of any of claims 1-5, wherein the polyol in the storage solution comprises glycerol.

7. The polymer-coated capillary of any of claims 1-6, wherein the polyol in the solution comprises a viscosity of less than 30 cP.

8. The polymer-coated capillary of any of claims 1-7, wherein the capillary comprises an internal diameter of less than 3000 µm.

9. The polymer-coated capillary of any of claims 1-8, wherein the storage solution comprises 10% of the polyol.

10. The polymer-coated capillary of any of claims 1-9, wherein the polymer-coated capillary does not comprise an end cap or seal.

11. A pre-assembled capillary cartridge (200) comprising at least one polymer-coated capillary (100) in accordance with any one of the preceding claims.

12. The pre-assembled capillary cartridge (200) of claim 11, wherein the pre-assembled capillary cartridge (200) comprises a plurality of polymer coated capillaries (210).

13. Use of a storage solution (130) for coating the interior surface of a polymer coated isoelectric focusing capillary tube during storage of the capillary tube (110), wherein the solution (130) comprises from 5% to 50% of a polyol.

14. A method of manufacturing a polymer-coated capillary (100) having improved storage capacity, the method comprising:
providing a capillary tube (110) having an interior surface and an exterior surface, wherein the capillary tube (110) has a polymer coating (120) on the interior surface, and
contacting the polymer coating (120) on the interior surface of the capillary tube (110) with a storage solution (130) comprising from 5% to 50% of a polyol for storage of the capillary tube (110).

15. The method of claim 14, wherein the method further comprises drying the interior of the polymer-coated capillary after contacting with the storage solution.

## Patentansprüche

1. Polymerbeschichtete Kapillare (100), umfassend:
ein Kapillarröhrchen (110), das eine Innenoberfläche und eine Außenoberfläche aufweist,
eine Polymerbeschichtung (120) auf der Innenoberfläche des Kapillarröhrchens (110),
**dadurch gekennzeichnet, dass** die genannte polymerbeschichtete Kapillare (100) weiter Folgendes umfasst
eine Aufbewahrungslösung (130), die von 5 % bis 50 % eines Polyols umfasst, das während Aufbewahrung des Kapillarröhrchens (110) mit der Polymerbeschichtung (120) in Kontakt ist.

2. Polymerbeschichtete Kapillare nach Anspruch 1, wobei die polymerbeschichtete Kapillare eine neutrale polymerbeschichtete Kapillare ist.

3. Polymerbeschichtete Kapillare nach einem der Ansprüche 1-2, wobei das Polyol in der Aufbewahrungslösung ein Polyol mit einem durchschnittlichen Molekulargewicht von höchstens etwa 15.000 Da umfasst.

4. Polymerbeschichtete Kapillare nach einem der Ansprüche 1-3, wobei das Polyol in der Aufbewahrungslösung ein Diol oder ein Triol umfasst.

5. Polymerbeschichtete Kapillare nach einem der Ansprüche 1-4, wobei das Polyol in der Aufbewahrungslösung einen Glycolanteil umfasst und ein durchschnittliches Molekulargewicht von höchstens etwa 15.000 Da aufweist.

6. Polymerbeschichtete Kapillare nach einem der Ansprüche 1-5, wobei das Polyol in der Aufbewahrungslösung Glycerol umfasst.

7. Polymerbeschichtete Kapillare nach einem der Ansprüche 1-6, wobei das Polyol in der Lösung eine Viskosität von weniger als 30 cP umfasst.

8. Polymerbeschichtete Kapillare nach einem der Ansprüche 1-7, wobei die Kapillare einen Innendurchmesser von weniger als 3.000 µm umfasst.

9. Polymerbeschichtete Kapillare nach einem der Ansprüche 1-8, wobei die Aufbewahrungslösung 10 % des Polyols umfasst.

10. Polymerbeschichtete Kapillare nach einem der Ansprüche 1-9, wobei die polymerbeschichtete Kapillare keine Endkappe oder Dichtung umfasst.

11. Vormontierte Kapillarkartusche (200), die mindestens eine polymerbeschichtete Kapillare (100) nach einem der vorstehenden Ansprüche umfasst.

12. Vormontierte Kapillarkartusche (200) nach Anspruch 11, wobei die vormontierte Kapillarkartusche (200) eine Vielzahl von polymerbeschichteten Kapillaren (210) umfasst.

13. Verwenden einer Aufbewahrungslösung (130) zum Beschichten der Innenoberfläche eines polymerbeschichteten isoelektrischen fokussierenden Kapillarröhrchens während Aufbewahrung des Kapillarröhrchens (110), wobei die Lösung (130) von 5 % bis 50 % eines Polyol umfasst.

14. Verfahren zum Herstellen einer polymerbeschichteten Kapillare (100), die verbesserte Aufbewahrungsfähigkeit aufweist, wobei das Verfahren Folgendes umfasst:
Bereitstellen eines Kapillarröhrchens (110), das eine Innenoberfläche und eine Außenoberfläche aufweist, wobei das Kapillarröhrchen (110) eine Polymerbeschichtung (120) auf der Innenoberfläche aufweist, und
Inkontaktbringen der Polymerbeschichtung (120) auf der Innenoberfläche des Kapillarröhrchens (110) mit einer Aufbewahrungslösung (130), die von 5 % bis 50 % eines Polyol zur Aufbewahrung des Kapillarröhrchens (110) umfasst.

15. Verfahren nach Anspruch 14, wobei das Verfahren weiter Trocknen des Inneren der polymerbeschichteten Kapillare nach Inkontaktbringen mit der Aufbewahrungslösung umfasst.

## Revendications

1. Capillaire (100) revêtu de polymère comprenant :
un tube capillaire (110) présentant une surface intérieure et une surface extérieure,
un revêtement polymère (120) sur la surface intérieure du tube capillaire (110),
**caractérisé en ce que** ledit capillaire (100) revêtu de polymère comprend en outre
une solution de stockage (130) comprenant de 5 % à 50 % de polyol qui entre en contact avec le revêtement polymère (120) pendant un stockage du tube capillaire (110).

2. Capillaire revêtu de polymère selon la revendication 1, dans lequel le capillaire revêtu de polymère est un capillaire revêtu de polymère neutre.

3. Capillaire revêtu de polymère selon l'une quelconque des revendications 1 et 2, dans lequel le polyol dans la solution de stockage comprend un polyol avec un poids moléculaire moyen qui ne dépasse pas environ 15000 Da.

4. Capillaire revêtu de polymère selon l'une quelconque des revendications 1 à 3, dans lequel le polyol dans la solution de stockage comprend un diol ou un triol.

5. Capillaire revêtu de polymère selon l'une quelconque des revendications 1 à 4, dans lequel le polyol dans la solution de stockage comprend un fragment glycol et présente un poids moléculaire moyen qui ne dépasse pas environ 15000 Da.

6. Capillaire revêtu de polymère selon l'une quelconque des revendications 1 à 5, dans lequel le polyol dans la solution de stockage comprend du glycérol.

7. Capillaire revêtu de polymère selon l'une quelconque des revendications 1 à 6, dans lequel le polyol dans la solution comprend une viscosité inférieure à 30 cP.

8. Capillaire revêtu de polymère selon l'une quelconque des revendications 1 à 7, dans lequel le capillaire comprend un diamètre interne inférieur à 3000 µm.

9. Capillaire revêtu de polymère selon l'une quelconque des revendications 1 à 8, dans lequel la solution de stockage comprend 10 % du polyol.

10. Capillaire revêtu de polymère selon l'une quelconque des revendications 1 à 9, dans lequel le capillaire revêtu de polymère ne comprend pas de capuchon d'extrémité ou de joint d'étanchéité.

11. Cartouche capillaire préassemblée (200) comprenant au moins un capillaire (100) revêtu de polymère selon l'une quelconque des revendications précédentes.

12. Cartouche capillaire préassemblée (200) selon la revendication 11, dans laquelle la cartouche capillaire préassemblée (200) comprend une pluralité de capillaires revêtus de polymère (210).

13. Utilisation d'une solution de stockage (130) destinée au revêtement de la surface intérieure d'un tube de capillaire à focalisation isoélectrique revêtu de polymère pendant le stockage du tube capillaire (110), dans laquelle la solution (130) comprend de 5 % à 50 % d'un polyol.

14. Procédé de fabrication d'un capillaire (100) revêtu de polymère présentant une capacité de stockage améliorée, le procédé comprenant :
la fourniture d'un tube capillaire (110) présentant une surface intérieure et une surface extérieure, dans lequel le tube capillaire (110) présente un revêtement polymère (120) sur la surface intérieure, et
la mise en contact du revêtement polymère (120) sur la surface intérieure du tube capillaire (110) avec une solution de stockage (130) comprenant de 5 % à 50 % d'un polyol pour un stockage du tube capillaire (110).

15. Procédé selon la revendication 14, dans lequel le procédé comprend en outre le séchage de l'intérieur du capillaire revêtu de polymère après une mise en contact avec la solution de stockage.
